(19) **Europäisches Patentamt**
**European Patent Office**
**Office européen des brevets**

(11) **EP 2 162 811 B1**

(12) **EUROPÄISCHE PATENTSCHRIFT**

(45) Veröffentlichungstag und Bekanntmachung des Hinweises auf die Patenterteilung:
**23.02.2011 Patentblatt 2011/08**

(51) Int Cl.:
*G05D 1/02* (2006.01)     *B60T 8/1755* (2006.01)
*B62D 7/15* (2006.01)

(21) Anmeldenummer: **08759014.7**

(22) Anmeldetag: **04.06.2008**

(86) Internationale Anmeldenummer:
**PCT/EP2008/004458**

(87) Internationale Veröffentlichungsnummer:
**WO 2009/000388 (31.12.2008 Gazette 2009/01)**

(54) **VERFAHREN UND VORRICHTUNG ZUM BEEINFLUSSEN DER QUERDYNAMIK EINES FAHRZEUGS**

METHOD AND DEVICE FOR INFLUENCING THE TRANSVERSAL DYNAMICS OF A VEHICLE

PROCÉDÉ ET DISPOSITIF POUR INFLUENCER LA DYNAMIQUE TRANSVERSALE D'UN VÉHICULE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.06.2007 DE 102007029605**

(43) Veröffentlichungstag der Anmeldung:
**17.03.2010 Patentblatt 2010/11**

(73) Patentinhaber: **Daimler AG**
**70327 Stuttgart (DE)**

(72) Erfinder:
• **AMMON, Dieter**
**71686 Remseck (DE)**
• **KALKKUHL, Jens**
**71088 Holzgerlingen (DE)**

• **KEPPLER, Daniel**
**75382 Althengstett (DE)**
• **RAU, Magnus**
**73230 Kirchheim unter Teck (DE)**
• **SUISSA, Avshalom**
**75382 Althengstett (DE)**

(74) Vertreter: **JENSEN & SON**
**366-368 Old Street**
**London**
**EC1V 9LT (GB)**

(56) Entgegenhaltungen:
**EP-A- 0 529 258**     **EP-A- 1 000 838**
**WO-A-99/58381**     **WO-A-2006/037678**
**DE-A1- 4 014 365**     **DE-A1- 4 419 650**
**DE-A1- 10 053 604**

## EP 2 162 811 B1

**Beschreibung**

Die Erfindung betrifft ein Verfahren zum Beeinflussen der Querdynamik eines Fahrzeugs, insbesondere eines Kraftfahrzeugs, und eine Querdynamik-Beeinflussungsvorrichtung, wobei eine auf das Fahrzeug und insbesondere den Fahrzeugaufbau einwirkende Querdynamik-Störgröße mittels einer Störgrößen-Bestimmungseinrichtung bestimmt und ein Fahrwerkseingriff Bremseingriff hervorgerufen wird.

Des Weiteren betrifft die vorliegende Erfindung eine Querdynamik-Beeinflussungsvorrichtung für ein Fahrzeug, insbesondere ein Kraftfahrzeug, mit einer Störgrößen-Bestimmungseinrichtung zum Bestimmen einer auf das Fahrzeug und insbesondere den Fahrzeugaufbau einwirkenden Querdynamik-Störgröße.

Zur Steigerung der Fahrsicherheit beim Führen eines Fahrzeugs, insbesondere eines Kraftfahrzeugs, ist es wünschenswert, den Fahrer bei plötzlich auftretenden Beeinflussungen oder Störungen der Fahrzeug-Querdynamik zu unterstützen. Derartige Störungen der Fahrzeug-Querdynamik können insbesondere bei starkem Seitenwind in Verbindung mit Seitenwindböen auftreten.

Aus der DE 40 14 365 A1 ist eine Vorrichtung zum Beeinflussen der Querdynamik eines Kraftfahrzeugs in Form eines Parallelfahrt-Regelsystems bekannt. Dabei wird während einer Parallelfahrt ein Abstand zu einer Leitvorrichtung gemessen und bei Abstandsänderungen, beispielsweise durch Seitenwind, durch Bremsen eine Fahrtrichtungskorrektur vorgenommen. Hierbei ist insbesondere als nachteilig anzusehen, dass die beschriebene Vorrichtung nur bei Vorhandensein der genannten Leitvorrichtung einsetzbar ist.

Weiterhin ist aus der WO 2006/037678 A1 ein Verfahren und eine Vorrichtung zur Beeinflussung der Querdynamik eines Fahrzeugs bekannt, bei dem beziehungsweise der auf eine festgestellte Störung der Querdynamik mittels einer Veränderung der Radaufstandskraft wenigstens eines Fahrzeugrades reagiert wird.

Aus der DE 44 19 650 A1 ist ein Verfahren zur Fahrzustandsstabilisierungsregelung bekannt, wobei die Regelung auf der Durchführung von Bremseingriffen beruht und wobei die Regelung aktiviert wird, wenn ein Fahrzustands-Istwert außerhalb eines Toleranzbandes liegt und wenn als zusätzliches Kriterium der Schwimmwinkel ein vorgegebenes Maß überschreitet.

Der Erfindung liegt die Aufgabe zu Grunde, ausgehend von einem Verfahren und einer Vorrichtung der jeweils eingangs genannten Art ein Verfahren beziehungsweise eine Vorrichtung anzugeben, so dass bei unterschiedlichen Fahrsituationen eine Erhöhung der Fahrsicherheit erreicht wird.

Die Aufgabe wird bei einem Verfahren gemäß den Merkmalen des Patentanspruchs 1 gelöst und bei einer Querdynamik-Beeinflussungsvorrichtung gemäß den Merkmalen des Patentanspruchs 16 gelöst.

Der Fahrzeugführer muss erfindungsgemäß bei einer plötzlichen Störung der Fahrzeug-Querdynamik nicht mehr mit einer möglicherweise unkontrollierten Lenkbewegung reagieren, sondern es kommt zu einer automatischen Kompensation bzw. Korrektur der Störung, wodurch die Fahrsicherheit erhöht wird. Dies erfolgt zudem erfindungsgemäß, ohne von bestimmten externen Einrichtungen, wie der oben erwähnten Leitvorrichtung, abhängig zu sein. Zudem wird der Fahrwerkseingriff nur dann ausgelöst, wenn die Eingriffsbedingung erfüllt ist. Auf diese Weise werden Fahrsituationen, in denen ein Fahrwerkseingriff, insbesondere ein Bremseingriff, keine die Fahrsicherheit erhöhende Wirkung hätte ausgeschlossen. Fahrwerkseingriffe, die die Fahrsicherheit mindern könnten, werden nicht durchgeführt.

Die Eingriffsbedingung ist erfüllt, wenn eines der angegebenen Kriterien oder eine Gruppe von mehreren der angegebenen Kriterien erfüllt ist:

- der Betrag der ermittelten Querdynamik-Störgröße ist größer als ein Störgrößenschwellenwert, wodurch Bremseingriffe bei geringen Querdynamikstörungen vermieden werden;
- die Fahrzeuglängsgeschwindigkeit ist größer als ein Fahrzeuglängsgeschwindigkeitsschwellenwert, wodurch Bremseingriffe in einer unkritischen Situationen mit kleiner Fahrzeuglängegeschwindigkeit vermieden werden kann;
- die sensorisch erfasste Istgierrate ist kleiner oder gleich einer beispielsweise anhand der Istquerbeschleunigung berechneten aktuellen Gierrate, um unnötige Bremseingriffe in Situationen zu vermeiden, bei denen die auftretende Gierrate bzw. Querbeschleunigung nicht hauptsächlich durch die Querdynamik-Störgröße hervorgerufen wurde;
- eine vom Fahrer durch Bremsen hervorgerufene, ein Bremsmoment beschreibende Bremsmomentgröße ist kleiner oder gleich einem Bremsmomentschwellenwert, so dass bei Bremsvorgängen mit großen Bremsmomenten, wie z.B. Not- bzw. Vollbremsvorgängen, automatische einseitige Bremseingriffe vermieden werden;
- eine den aktuellen Federweg an einer Fahrwerksfeder eines Fahrzeugrades beschreibende Federweggröße ist kleiner oder gleich einem Federwegschwellenwert;
- eine die Differenz der aktuellen Federwege an den beiden Fahrwerksfedern einer Fahrzeugachse beschreibende Differenzfederweggröße ist kleiner oder gleich einem Differenzfederwegschwellenwert;
- eine die Schlupfdifferenz zwischen zwei Fahrzeugrädern beschreibende Schlupfdifferenzgröße ist kleiner oder gleich einem Schlupfdifferenzschwellenwert.

Vorteilhafte Ausgestaltungen der Erfindung ergeben sich aus den abhängigen Patentansprüchen.

Vorteilhafterweise ist die Eingriffsbedingung nur dann erfüllt, wenn der Betrag des Lenkradwinkels kleiner oder gleich einem Lenkradwinkelschwellenwert ist und/oder wenn der Betrag der Lenkradwinkelgeschwindigkeit kleiner oder gleich einem Lenkradwinkelgeschwindigkeitsschwellenwert ist. Dadurch kann ein Fahrwerkseingriff bei dynamischen Lenkraddrehungen durch den Fahrer vermieden werden, um die Fahrsicherheit nicht zu gefährden.

Des Weiteren kann die Eingriffsbedingung nur dann erfüllt sein, wenn der Betrag der stationären Querbeschleunigung kleiner oder gleich einem Querbeschleunigungsschwellenwert ist. Auf diese Weise werden Fahrwerkseingriffe beim Fahren von dynamischen Manövern, beispielsweise beim Durchfahren von Kurven mit entsprechend kleinen Kurvenradien vermieden. Es wird mithin eine längsgeschwindigkeitsabhängige Lenkradwinkelbegrenzung erreicht.

Es ist auch möglich, mittels der Störgrößen-Bestimmungseinrichtung einen auf den Fahrzeugaufbau des Fahrzeugs einwirkenden Seitenwind zu erkennen und durch den Fahrwerkseingriff eine entsprechende Störung der Querdynamik des Fahrzeugs zumindest teilweise zu kompensieren, um die Fahrsicherheit im Falle von auftretendem Seitenwind zu erhöhen.

Der Fahrwerkseingriff kann ein

- Bremseingriff an einem oder mehreren Rädern sein und/oder
- eine Beeinflussung der Radaufstandskräfte an einem oder mehreren Rädern und/oder
- eine Beeinflussung des Servomoments eines Servomotors eines Servolenksystems und/oder
- eine Veränderung eines oder mehrerer Radantriebsmomente an einem oder mehreren Rädern sein.

Des Weiteren kann ein Eingriffsbestimmungswert ermittelt werden, der den Betrag der Querdynamik-Störgröße oder den Betrag des anhand der Querdynamik-Störgröße ermittelten, zur Kompensation der Querstörung einzustellenden Giermoments oder den Betrag einer sonstigen, mit einer der beiden Größen korrelierenden Größe beschreibt. Dabei kann bei Beträgen des Eingriffsbestimmungswerts unterhalb eines unteren Schwellenwertes nur eines der Räder, insbesondere eines der nicht lenkbaren Räder, über eine jeweils zugeordnete Bremseinrichtung abgebremst werden. Bei Beträgen des Eingriffsbestimmungswerts größer oder gleich dem unteren Schwellenwert und kleiner als ein oberer Schwellenwert, kann nur eines der lenkbaren Räder an der Vorderachse über die jeweils zugeordnete Bremseinrichtung abgebremst werden. Weiterhin können bei Beträgen des Eingriffsbestimmungswerts größer oder gleich dem oberen Schwellenwert beide Räder derselben Fahrzeugseite über die jeweils zugeordnete Bremseinrichtung abgebremst werden. Auf diese Weise kann der Bremseingriff angepasst an die Intensität der durch die Querdynamik-Störgröße verursachten Querdynamikstörung erfolgen.

Ferner besteht auch die Möglichkeit, beide Räder derselben Fahrzeugseite über die jeweils zugeordnete Bremseinrichtung abzubremsen, wobei die Bremskraftverteilung zwischen dem lenkbaren Rad und dem entsprechenden nicht lenkbaren Rad derselben Fahrzeugseite parameterabhängig ist und insbesondere fahrzeugabhängig vorgegeben und/oder fahrsituationsabhängig eingestellt werden kann.

Im Folgenden wird ein Ausführungsbeispiel der Erfindung anhand der Zeichnung erläutert. Es zeigen:

Fig. 1    eine schematische Darstellung eines Kraftfahrzeugs mit einer Ausgestaltung der erfindungsgemäßen Vorrichtung,

Fig. 2    ein Blockschaltbild zur Darstellung eines Ablaufs einer Ausgestaltung des erfindungsgemäßen Verfah- rens,

Fig. 3    ein Blockschaltbild der Überprüfung mehrerer Krite- rien einer Eingriffsbedingung in einem Gültigkeits- block VAL aus Fig. 2 und

Fig. 4    ein Blockschaltbild der Überprüfung weiterer Krite- rien einer Eingriffsbedingung in einem Ausschalt- block OFF aus Fig. 2.

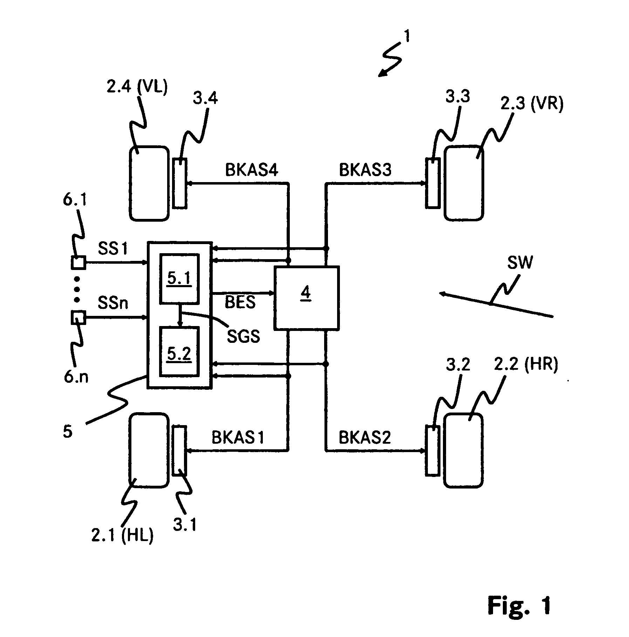

Fig. 1 zeigt eine schematische Darstellung eines Kraftfahrzeugs mit einer Ausgestaltung der erfindungsgemäßen Vorrichtung. Das Kraftfahrzeug 1 weist vier Räder 2.1-2.4 auf, die jeweils in Wirkverbindung mit einer zugeordneten Bremseinheit 3.1-3.4 stehen. Jede der Bremseinheiten 3.1-3.4 ist zum Abbremsen des ihrer jeweils zugeordneten Rades 2.1-2.4 des Fahrzeugs 1 ausgebildet und kann unabhängig von den jeweils anderen Bremseinheiten individuell angesteuert werden. Dadurch können unterschiedlich hohe Bremskräfte bzw. Bremswirkungen an den einzelnen Rädern 2.1-2.4 erzielt werden. Eine entsprechende Betätigung der Bremseinheit mit 2.1-2.4 wird auch als "Bremseingriff" bezeichnet. Zum Aktivieren der Bremseinheiten 3.1-3.4 ist erfindungsgemäß eine Bremskraft-Aktivierungseinrichtung 4 vorgesehen, die mit den Bremseinheiten 3.1-3.4 in signaltechnischer Wirkverbindung steht. Die Bremskraft-Aktivierungseinrichtung 4 steht ihrerseits in signaltechnischer Wirkverbindung mit einer Steuereinheit 5, die eine Störgrößen-Bestimmungseinrichtung 5.1 - die vorliegend auch als "Störgrößenbeobachter" bezeichnet wird - und eine Überprüfungseinrichtung 5.2 aufweist, wobei die Steuereinheit 5 mit einer Anzahl von Sensoren 6.1-6.n verbunden ist und

Die Sensoren 6.1-6.n dienen zur Bestimmung von fahrdynamischen Istgrößen des Fahrzeugs 1, wie einer Istgierrate, einer Fahrzeuglängsgeschwindigkeit, eines Lenkradwinkels, eines Lenkwinkels oder einer Istquerbeschleunigung. Entsprechende Sensorsignale in SS1-SSn werden von den Sensoren 6.1-6.n an die Steuereinheit 5 und mithin an die Störgrößen-Bestimmungseinrichtung 5.1 und die Überprüfungseinrichtung 5.2 übermittelt.

Die Störgrößen-Bestimmungseinrichtung 5.1 bestimmt aus den Istgrößen des Fahrzeugs 1 eine Querdynamik-Störgröße des Fahrzeugs wie dies in der deutschen Patentanmeldung 10 2004 017 638 im Einzelnen erläutert ist. Auf diese Weise kann die Störgrößen-Bestimmungseinrichtung 5.1 insbesondere zum Bestimmen der Störeinwirkung von auf das Fahrzeug 1 bzw. auf dessen Fahrzeugaufbau einwirkendem Seitenwind SW und die dadurch verursachte Beeinflussung der Fahrzeug-Querdynamik verwendet werden. Auf die deutsche Patentanmeldung 10 2004 017 638 wird insoweit ausdrücklich Bezug genommen.

Die Störgrößen-Bestimmungseinrichtung 5.1 erzeugt ein Störgrößensignal SGS, welches an die Überprüfungseinrichtung 5.2 übermittelt wird. Bei der Überprüfung in der Überprüfungseinrichtung 5.2 wird anhand einer vorgegebenen Eingriffsbedingung festgestellt, ob ein Bremseingriff hervorgerufen werden soll, der der Querdynamikstörung entgegenwirkt. Ein entsprechendes Eingriffssignal BES wird zu der Bremskraft-Aktivierungseinrichtung 4 übertragen. Letztere aktiviert in Abhängigkeit von dem Eingriffssignal BES wenigstens eine oder mehrere der Bremseinheiten 3.1-3.4 mittels entsprechender Bremskraft-Aktivierungssignale BKAS1-BKAS4. Die Bremskraft-Aktivierungssignale BKAS1-BKAS4 werden auch der Steuereinheit 5 und insbesondere der Störgrößen-Bestimmungseinrichtung 5.1 übermittelt, um das an einer Fahrzeugseite verursachte Bremsmoment und die daraus resultierende Beeinflussung der Gierbewegung des Fahrzeugs bei der Bestimmung der Querdynamik-Störgröße berücksichtigen zu können.

Grundsätzlich wird der Bremseingriff zumindest an einem Rad 2.1, 2.4 oder 2.2, 2.3 einer Fahrzeugseite durch-geführt, um ein der Querstörung entgegen gerichtetes Giermoment zu erzeugen. Um den Bremseingriff für den Fahrer möglichst komfortabel zu gestalten kann ausschließlich oder zumindest in einer ersten Bremseingriffsstufe nur das entsprechende nicht lenkbare Rad 2.1 oder 2.2 an der Hinterachse des Fahrzeugs abgebremst werden, so dass eventuell spürbare Rückwirkungen am Lenkrad des Fahrzeugs 1 so gering wie möglich bleiben. Wie stark etwaige Rückwirkungen beim radindividuellen Bremsen eines lenkbaren Rades 2.3 oder 2.4 auf das Lenkrad sind, ist vom Fahrzeugtyp und dessen Fahrwerksauslegung abhängig. Ob der Bremseingriff an einem lenkbaren Rad 2.3 bzw. 2.4 und/oder an einem nicht lenkbaren Rad 2.1 bzw. 2.2 erfolgt, wird individuell an den Fahrzeugtyp angepasst. Bei Fahrzeugtypen, bei denen beim Bremsen eines lenkbaren Rades 2.3 oder 2.4 nur geringe Rückwirkungen am Lenkrad auftreten, kann daher alternativ oder zusätzlich zum nicht lenkbaren Hinterrad 2.1 oder 2.2 auch das lenkbare Rad 2.3 oder 2.4 derselben Fahrzeugseite zur Kompensation von Querstörungen abgebremst werden.

Es ist daher möglich, den Bremseingriff so zu gestalten, dass die Räder 2.1, 2.4 oder 2.2, 2.3 einer Fahrzeugseite gleichzeitig abgebremst werden. Die Bremskraftverteilung zwischen lenkbarem Vorderrad 2.3 oder 2.4 und Hinterrad 2.2 oder 2.1 auf dieser Fahrzeugseite kann fahrzeugabhängig vorgegeben und/oder fahrsituationsabhängig eingestellt werden. Zum Beispiel kann die Bremskraftverteilung zwischen lenkbarem Vorderrad 2.3 oder 2.4 und nicht lenkbarem Hinterrad 2.2 oder 2.1 von Parametern wie dem Betrag der Querdynamik-Störgröße, dem Lenkwinkel, der Längsgeschwindigkeit, der Querbeschleunigung, der Gierrate oder anderen längs- und querdynamischen Fahrzustandsgrößen abhängen.

In der Überprüfungseinrichtung 5.2 kann ein Eingriffsbestimmungswert bestimmt werden, der den Betrag der Querdynamik-Störgröße oder den Betrag des anhand der Querdynamik-Störgröße ermittelten, zur Kompensation der Querstörung einzustellenden Giermoments oder den Betrag einer sonstigen, mit einer der beiden Größen korrelierenden Größe beschreibt. Abhängig vom Eingriffsbestimmungswert kann dann ein mehrstufiger Bremseingriff erfolgen, wobei sich z.B. folgende Möglichkeiten ergeben:

a) Der Eingriffsbestimmungswert überschreitet den Eingriffsschwellenwert und ist kleiner als ein vorgegebener unterer Schwellenwert: Zunächst wird nur ein Rad 2.1 oder 2.2 oder 2.3 oder 2.4, vorzugsweise ein nicht lenkbares Rad 2.3 oder 2.4 abgebremst. Erst wenn dieser ausschließlich an einem der Räder 2.1 oder 2.2 oder 2.3 oder 2.4 durchgeführte Bremseingriff keine ausreichende Wirkung zeigt, wird zusätzlich das weitere Rad 2.1 oder 2.2 oder 2.3 oder 2.4 derselben Fahrzeugseite abgebremst.

b) Wenn der Eingriffsbestimmungswert größer ist als oder gleich groß wie der vorgegebene untere Schwellenwert werden sofort beide Räder 2.1, 2.4 oder 2.2, 2.3 derselben Fahrzeugseite abgebremst, um einen ausreichend schnelle Kompensation bzw. Reduzierung der Querdynamikbeeinflussung des Fahrzeugs 1 durch die Querdynamik-Störgröße sicherzustellen und eine hohe Fahrsicherheit zu gewährleisten.

c) In einer weiteren Ausprägung ist es auch möglich, drei Eingriffsstufen vorzusehen:

- Bei einem Eingriffsbestimmungswert oberhalb des Eingriffsschwellenwerts und unterhalb des unteren Schwellenwertes wird nur eines der nicht lenkbaren Räder 2.1 oder 2.2 über die jeweils zugeordnete Bremseinrichtung 3.1 bzw. 3.2 abgebremst.
- Bei einem Eingriffsbestimmungswert größer oder gleich dem unteren Schwellenwert und kleiner einem oberen Schwellenwert wird nur eines der lenkbaren Räder 2.3 oder 2.4 an der Vorderachse über die jeweils zugeordnete Bremseinrichtung 3.3 bzw. 3.4 abgebremst.

- Bei einem Eingriffsbestimmungswert größer oder gleich dem oberen Schwellenwert werden beide Räder 2.1, 2.4 oder 2.2, 2.3 derselben Fahrzeugseite durch die jeweils zugeordnete Bremseinrichtungen 3.1, 3.4 oder 3.2, 3.3 abgebremst.

Wirkt auf den Fahrzeugaufbau des Fahrzeugs 1 z.B. eine Seitenwindböe SW in Fahrtrichtung gesehen von rechts ein, so kann das rechte hintere Rad 2.2 und/oder das rechte vordere Rad 2.3 abgebremst werden, um dadurch ein Giermoment auf das Fahrzeug 1 um seine Hochachse im Uhrzeigersinn zu generieren. Bei einem von links auf das Fahrzeug 1 einwirkenden Seitenwind sind die Richtungen genau umgekehrt, wobei dann das linke vordere Rad 2.4 und/oder das linke hintere Rad 2.1 abgebremst werden.

Durch den Bremseingriff wird erfindungsgemäß die Störung der Querdynamik durch den Seitenwind SW zumindest teilweise kompensiert. Zu diesem Zweck ist die Störgrößen-Bestimmungseinrichtung 5 und/oder die Bremskraft-Aktivierungseinrichtung 4 dazu ausgebildet, mittels eines geeigneten Verfahrens beziehungsweise Modells, eine erforderliche Bremskraft an einem Rad oder mehreren Rädern 2.1-2.4 des Fahrzeugs 1 zu ermitteln, um entsprechend - wie bereits erwähnt - die aufgetretene Störung der Fahrzeug-Querdynamik zu kompensieren.

Der Führer des Fahrzeugs 1 wird also bei der Kompensation einer Störung der Fahrzeug-Querdynamik, wie beispielsweise durch eine Seitenwindböe, unterstützt. Die auftretende Störung der Querdynamik wird automatisch vermindert oder vollständig kompensiert. Dies trägt zu einer Erhöhung der Fahrsicherheit bei.

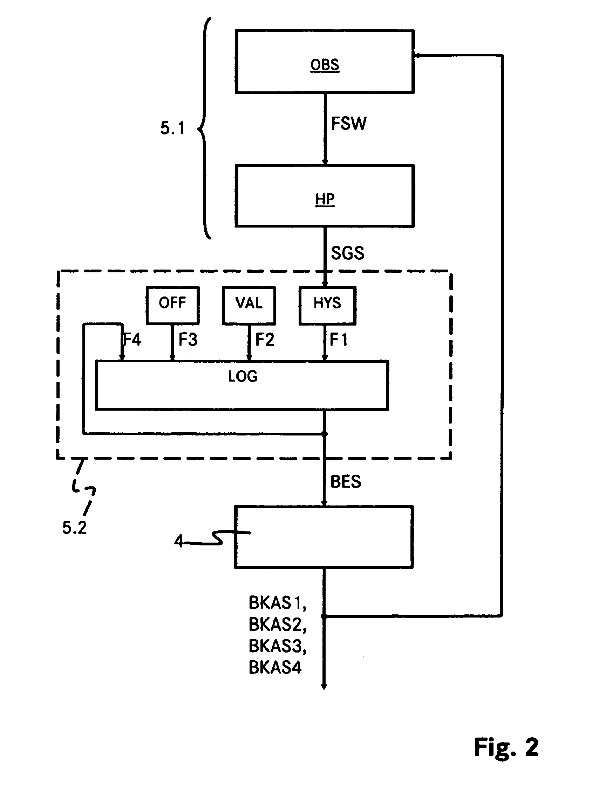

Nachfolgend wird ein Ausführungsbeispiel eines Verfahrens anhand von Fig. 2 erläutert. Fig. 2 zeigt ein Blockschaltbild einer Ausgestaltung des erfindungsgemäßen Verfahrens zum Beeinflussen der Querdynamik eines Fahrzeugs, insbesondere des Kraftfahrzeugs 1 gemäß Fig. 1.

Das erfindungsgemäße Verfahren beginnt mit der Bestimmung der Querdynamik-Störgröße FSW in einem Beobachterblock OBS auf Basis der mittels der Sensoren 6.1 bis 6.n gemessenen fahrdynamischen Istgrößen des Fahrzeugs und auf Basis der Bremskraft-Aktivierungssignale BKAS1-BKAS4. Das im Beobachterblock OBS verwendete Verfahren zur Bestimmung der Querdynamik-Störgröße FSW ist in der DE 10 2004 017 638 A1 beschrieben, auf die in diesem Zusammenhang Bezug genommen wird.

Die auf diese Weise mittels des Beobachterblocks OBS ermittelte Querdynamik-Störgröße FSW wird anschließend in einem Hochpassfilter HP hochpassgefiltert, um stationäre Anteile der Querdynamik-Störgröße FSW herauszufiltern, die im Folgenden Verfahren nicht berücksichtigt werden sollen. Lediglich dynamische Anteile der Querdynamik-Störgröße FSW werden im weiteren Verfahren berücksichtigt. Der Hochpassfilter HP erzeugt die hochpassgefilterte Querdynamik-Störgröße, die im vorliegenden Fall dem Störgrößensignal SGS entspricht, das an die Überprüfungseinrichtung 5.2 der Steuereinheit 5 übermittelt wird.

In der Überprüfungseinrichtung 5.2 wird überprüft, ob eine vorgegebene Eingriffsbedingung erfüllt ist. Die Eingriffsbedingung weist beim Ausführungsbeispiel des Verfahrens mehrere Kriterien auf, die beispielsgemäß jeweils einzeln erfüllt sein müssen, um die Eingriffsbedingung zu erfüllen. Diese Kriterien dienen dazu, Fahrsituationen auszuschließen, in denen kein automatischer Bremseingriff hervorgerufen werden soll.

In einem Hystereseblock HYS wird als erstes Kriterium geprüft, ob das Störgrößensignal SGS - also die hochpassgefilterte Querdynamik-Störgröße - größer ist als ein vorgegebener Aktivierungsschwellenwert oder kleiner als ein Deaktivierungsschwellenwert. Der Aktivierungsschwellenwert ist größer als der Deaktivierungsschwellenwert, so dass eine Hysterese gebildet ist. Ist das Störgrößensignal SGS größer als der Aktivierungsschwellenwert, so wird ein erstes Flag F1=1 gesetzt. Ist das Störgrößensignal SGS hingegen kleiner als der Deaktivierungsschwellenwert, so wird das erste Flag K1=0 gesetzt:

SGS > Aktivierungsschwellenwert $\Rightarrow$ F1=1 oder
SGS < Deaktivierungsschwellenwert $\Rightarrow$ F1=0.

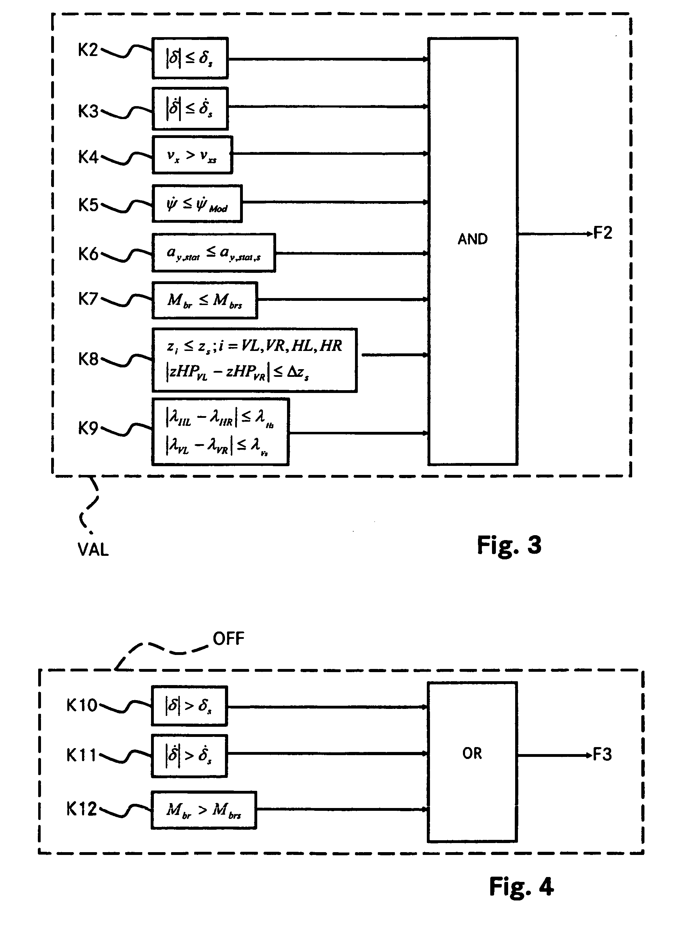

In einem Gültigkeitsblock VAL werden weitere Kriterien überprüft, beispielsgemäß acht Kriterien K2 bis K9, über die die aktuelle Fahrsituation beurteilt wird, wie dies in Fig. 3 im Einzelnen schematisch dargestellt ist. Folgende Kriterien werden geprüft:

- zweites Kriterium K2:

es wird geprüft, ob der Betrag des Lenkradwinkels $\delta$ kleiner oder gleich einem Lenkradwinkelschwellenwert $\delta_s$ ist;

- drittes Kriterium K3:

es wird geprüft, ob der Betrag der Lenkradwinkelgeschwindigkeit $\dot{\delta}$ kleiner oder gleich einem Lenkradwinkel-

geschwindigkeitsschwellenwert $\dot{\delta}_s$ ist;

- viertes Kriterium K4:

    es wird geprüft, ob die Fahrzeuglängsgeschwindigkeit $v_x$ größer ist als ein Fahrzeuglängsgeschwindigkeits-schwellenwert $v_{xs}$;

- fünftes Kriterium K5:

    es wird geprüft, ob die sensorisch erfasste Istgierrate $\dot{\Psi}$ kleiner oder gleich einer berechneten aktuellen Gierrate $\dot{\Psi}_{Mod}$ ist; die berechnete aktuelle Gierrate $\dot{\Psi}_{Mod}$ wird auf Basis eines vorgegebenen Fahrzeugmodells, das den Zusammenhang zwischen Querbeschleunigung und Gierrate beschreibt, anhand der gemessenen Istquerbeschleunigung ay bestimmt;

- sechstes Kriterium K6:

    es wird geprüft, ob der Betrag der stationären Querbeschleunigung $a_{y,stat}$ kleiner oder gleich einem Querbe-schleunigungsschwellenwert $a_{y,stat,s}$ ist;

- siebtes Kriterium K7:

    es wird geprüft, ob eine vom Fahrer durch Bremsen hervorgerufenes Bremsmoment $M_{br}$, das beim Ausführungsbeispiel eine Bremsmomentgröße darstellt,
    kleiner oder gleich einem Bremsmomentschwellenwert $M_{brs}$ ist;

- achtes Kriterium K8:

    es wird geprüft, ob die aktuellen Federwege $z_{VL}$, $z_{VR}$, $z_{HL}$, $z_{HR}$ an den Fahrwerksfedern der Fahrzeugrädern 2.1 (HL), 2.2 (HR), 2.3 (VR), 2.4 (VL), die beispielsgemäß eine Federweggröße darstellt, kleiner oder gleich einem Federwegschwellenwert $z_s$ sind; zusätzlich wird geprüft, ob der Betrag einer Differenzfederweggröße , die beispielsgemäß von der Differenz $|zHP_{VL}\text{-}zHP_{VR}|$ der insbesondere über einen Hochpass hochpassgefilterten aktuellen Federwege $zHP_{VL}$, $zHP_{VR}$ an den beiden Fahrwerksfedern einer Fahrzeugachse gebildet ist, kleiner oder gleich einem Differenzfederwegschwellenwert $\Delta z_s$ ist;

- neuntes Kriterium K9:

    es wird geprüft, ob eine Schlupfdifferenzgröße, die hier von der Schlupfdifferenz zwischen zwei Fahrzeugrädern gebildet ist, kleiner oder gleich einem Schlupfdifferenzschwellenwert ist; beispielsgemäß wird eine erste Schlupf-differenz $|\lambda_{VL}\text{-}\lambda_{VR}|$ zwischen den beiden Vorderrädern 2.3 (VR), 2.4 (VL) und eine zweite Schlupfdifferenz $|\lambda_{IIL}\text{-}\lambda_{IIR}|$ zwischen den beiden Hinterrädern 2.1 (HL), 2.2 (HR) mit einem Vorderachs-Schlupfdifferenzschwellenwert $\lambda_{vs}$ bzw. einem Hinterachs-Schlupfdifferenzschwellenwert $\lambda_{vs}$ verglichen:

$$\left|\lambda_{HL} - \lambda_{HR}\right| \leq \lambda_{IIs}$$

$$\left|\lambda_{VL} - \lambda_{VR}\right| \leq \lambda_{Vs}$$

Über den Und-Verknüpfungsblock AND wird festgestellt, ob alle der acht Kriterien K2 bis K9 erfüllt sind, also ob alle in Fig. 3 angegebenen Ungleichungen erfüllt und demnach "wahr" sind. Ist dies der Fall wird das zweite Flag F2=1 gesetzt. Andernfalls, wenn eines oder mehrere der im Gültigkeitsblock VAL geprüften Kriterien K2 bis K9 nicht erfüllt sind, ist das zweite Flag F2=0.

In einem in Fig. 4 näher dargestellten Ausschaltblock OFF werden ein oder mehrere Ausschaltkriterien K10, K11, K12 geprüft. Ein drittes Flag F3 wird auf F3=1 gesetzt, wenn zumindest eines der Ausschaltkriterien erfüllt ist. Die bei dem hier beschriebenen Ausführungsbeispiel geprüften Ausschaltkriterien sind:

- erstes Ausschaltkriterium K10:

es wird geprüft, ob der Betrag des Lenkradwinkels $\delta$ größer ist als der Lenkradwinkelschwellenwert $\delta_s$;

- zweites Ausschaltkriterium K11:

es wird geprüft, ob der Betrag der Lenkradwinkelgeschwindigkeit $\dot{\delta}$ größer ist als der Lenkradwinkelgeschwindigkeitsschwellenwert $\dot{\delta}_s$;

- drittes Ausschaltkriterium K12:

es wird geprüft, ob das vom Fahrer durch Bremsen hervorgerufenes Bremsmoment $M_{br}$, größer ist als der Bremsmomentschwellenwert $M_{brs}$.

Ist keines der Ausschaltkriterien K10, K11, K12 erfüllt, so ist das dritte Flag F3=0. Die Ausschaltkriterien K10, K11, K12 werden im Oder-Verknüpfungsblock OR miteinander zum dritten Flag F3 verknüpft.

Unter Berücksichtigung der drei Flags F1, F2, F3 und eines vierten Flags F4 wird in einem Logikblock LOG das Eingriffssignal BES ermittelt, das als viertes Flag F4 an einen Eingang des Logikblocks LOG zurückgekoppelt wird. Im Logikblock werden zur Ermittlung des Eingriffssignals BES sowohl die im aktuellen Verfahrenszyklus n vorliegenden Werte der Flags F1, F2, F3, F4, als auch zum Teil die Werte der Flags F1, F2, F3, F4 aus dem vorangegangenen Verfahrenszyklus n-1 verwendet. Im vorliegenden Fall werden die Werte des ersten Flags F1, des zweiten Flags F2 und des vierten Flags F4 aus dem vorangegangenen Verfahrenszyklus berücksichtigt.

Als notwendige Bedingungen für ein einen Bremsvorgang auslösendes Eingriffssignal BES gelten:

- das dritte Flag F3=0, d.h. keines der Ausschaltkriterien K10, K11, K12 ist erfüllt und
- das erste Flag F1=1, d.h. die im Hystereseblock HYS definierte Bedingungen müssen erfüllt sein.

Das Eingriffssignal BES ist im aktuellen Verfahrenzyklus n BES(n)=F4(n)=1, wenn eine der in der folgenden Tabelle auftretenden Kombinationen auftritt. Jede Zeile der Tabelle entspricht einer Kombination von Zuständen, die im aktuellen Verfahrenszyklus einen Bremsvorgang auslöst oder aufrechterhält:

| F2(n-1) | F2(n) | F1(n-1) | F1(n) | F3(n) | F4(n-1) |
|---|---|---|---|---|---|
| 0 | 0 | 1 | 1 | 0 | 1 |
| 0 | 1 | 0 | 1 | 0 | 0 |
| 0 | 1 | 0 | 1 | 0 | 1 |
| 0 | 1 | 1 | 1 | 0 | 1 |
| 1 | 0 | 1 | 1 | 0 | 1 |
| 1 | 1 | 0 | 1 | 0 | 0 |
| 1 | 1 | 0 | 1 | 0 | 1 |
| 1 | 1 | 1 | 1 | 0 | 1 |

über die Bremskraft-Aktivierungseinrichtung 4 wird ein Bremsvorgang an einem oder mehreren der Räder ausgelöst oder aufrechterhalten, wenn das Eingriffssignal BES=1 ist. Anschließend beginnt ein neuer Verfahrenszyklus analog zu dem oben beschriebenen Verfahrenszyklus. Zu Beginn des ersten Verfahrenszyklus werden als Werte der Flags F1, F2, F3, F4 für den vorangegangenen Verfahrenszyklus jeweils ein Startwerte F1(Start), F2(Start), F3(Start) und F4(Start) vorgegeben, so dass das Verfahren auch beim ersten Verfahrenszyklus arbeiten kann, z.B. beim Starten des Fahrzeugs. Eine solche Vorgehensweise ist bei zyklischen Verfahren bekannt. Beispielsweise können die Startwerte wie folgt vorgegeben sein: F1(Start)=0, F2(Start)=0, F3(Start)=0 und F4(Start)=0.

Das hier beschriebene Ausführungsbeispiel führt als Fahrwerkseingriff einen Bremseingriff durch um der Querdynamik-Störung entgegenzuwirken.

Alternativ oder zusätzlich kann die zumindest teilweise Kompensation der Querdynamik-Störung auch durch andere Fahrwerkseingriffe erfolgen:

- Das Servomoment eines Servomotors eines insbesondere elektrischen Servolenksystems kann beeinflusst werden, so dass der Fahrer beim Gegenlenken unterstützt wird. Das Servomoment ist so gerichtet, dass der Fahrer dazu veranlasst wird, der Querdynamik-Störung entgegenzulenken. Hält der Fahrer das Lenkrad nicht fest und gibt er dem Servomoment des Servomotors nach, erfolgt sozusagen ein automatisches Gegenlenken.

- Die Radaufstandkraft eines oder mehrerer Räder 2.1 - 2.4 des Fahrzeugs 1 können verändert werden, beispielsweise durch die Ansteuerung eines dem betreffenden Rad 2.1, 2.2, 2.3, 2.4 zugeordneten aktiven Feder oder Dämpfersystems oder eines aktiven Stabilisators des Fahrzeugs. Beispielsweise kann die Radaufstandkraft zwei diagonal einander gegenüberliegenden Rädern 2.1 (HL) und 2.3 (VR) oder 2.2 (HR) und 2.4 (VL) gegenüber den beiden anderen Rädern 2.2 (HR) und 2.4 (VL) oder 2.1 (HL) und 2.3 (VR) erhöht werden. Durch die Achsgeometrie, insbesondere die Vorspur, wird eine Querkraft erzeugt. Alternativ oder zusätzlich können die Radaufstandskräfte auch an zwei sich diagonal gegenüberliegenden Rädern verringert werden. Diese Querkraft kann dazu verwendet werden, um die Querdynamik-Störung zumindest teilweise zu kompensieren.

- Analog zur Durchführung eines Bremsvorgangs besteht auch die Möglichkeit, die Radantriebskraft ungleich auf die beiden Fahrzeugseiten zu verteilen, was beispielsweise über ein ansteuerbares Achsdifferenzial erreicht werden kann. Die Radantriebskraft kann also an einer Fahrzeugseite erhöht und/oder an der jeweils anderen Fahrzeugseite verringert werden. Aufgrund der ungleichen Radantriebskräfte auf beiden Fahrzeugseiten wird eine Gierbewegung hervorgerufen. Diese Gierbewegung erfolgt entgegen der Querdynamik-Störung und kann diese daher zumindest mindern und im Idealfall vollständig kompensieren.

**Patentansprüche**

1. Verfahren zum Beeinflussen der Querdynamik eines Fahrzeugs (1), bei dem eine auf das Fahrzeug (1) und insbesondere den Fahrzeugaufbau einwirkende Querdynamik-Störgröße bestimmt wird, und bei dem überprüft wird, ob eine vorgegebene Eingriffsbedingung erfüllt ist, wobei bei erfüllter Eingriffsbedingung ein Fahrwerkseingriff zum Beeinflussen der Querdynamik vorgenommen wird, und wobei die Eingriffsbedingung erfüllt ist, wenn der Betrag der ermittelten Querdynamik-Störgröße größer ist als ein Störgrößenschwellenwert,
**dadurch gekennzeichnet,**
**dass** die Eingriffsbedingung erfüllt ist, wenn zusätzlich entweder eines der folgenden Kriterien oder eine Gruppe von mehreren der folgenden Kriterien erfüllt ist:

   - die Fahrzeuglängsgeschwindigkeit ist größer als ein Fahrzeuglängsgeschwindigkeitsschwellenwert;
   - die sensorisch erfasste Istgierrate ist kleiner oder gleich einer berechneten aktuellen Gierrate;
   - eine die Schlupfdifferenz zwischen zwei Fahrzeugrädern beschreibende Schlupfdifferenzgröße ist kleiner oder gleich einem Schlupfdifferenzschwellenwert.

2. Verfahren nach Anspruch 1,
**dadurch gekennzeichnet, dass** die Eingriffsbedingung erfüllt ist, wenn eine vom Fahrer durch Bremsen hervorgerufene, ein Bremsmoment beschreibende Bremsmomentgröße kleiner oder gleich einem Bremsmomentschwellenwert ist.

3. Verfahren nach Anspruch 1 oder 2,
**dadurch gekennzeichnet, dass** die Eingriffsbedingung erfüllt ist, wenn mindestens eines der folgenden Kriterien erfüllt ist:

   - eine den aktuellen Federweg an einer Fahrwerksfeder eines Fahrzeugrades beschreibende Federweggröße ist kleiner oder gleich einem Federwegschwellenwert;
   - eine die Differenz der aktuellen Federwege an den beiden Fahrwerksfedern einer Fahrzeugachse beschreibende Differenzfederweggröße ist kleiner oder gleich einem Differenzfederwegschwellenwert.

4. Verfahren nach einem der vorhergehenden Ansprüche,
**dadurch gekennzeichnet, dass**
die Eingriffsbedingung erfüllt ist, wenn der Betrag des Lenkradwinkels kleiner oder gleich einem Lenkradwinkelschwellenwert ist und/oder wenn der Betrag der Lenkradwinkelgeschwindigkeit kleiner oder gleich einem Lenkradwinkelgeschwindigkeitsschwellenwert ist.

5. Verfahren nach einem der vorhergehenden Ansprüche,
**dadurch gekennzeichnet, dass**

die Eingriffsbedingung erfüllt ist, wenn der Betrag der stationären Querbeschleunigung kleiner oder gleich einem Querbeschleunigungsschwellenwert ist.

6. Verfahren nach einem der vorhergehenden Ansprüche,
**dadurch gekennzeichnet, dass**
mittels der Störgrößen-Bestimmungseinrichtung (5) ein auf den Fahrzeugaufbau des Fahrzeugs (1) einwirkender Seitenwind (SW) erkannt und durch den Fahrwerkseingriff eine entsprechende Störung der Querdynamik des Fahrzeugs (1) zumindest teilweise kompensiert wird.

7. Verfahren nach einem der vorhergehenden Ansprüche,
**dadurch gekennzeichnet, dass**
ein Eingriffsbestimmungswert ermittelt wird, der den Betrag der Querdynamik-Störgröße oder den Betrag des anhand der Querdynamik-Störgröße ermittelten, zur Kompensation der Querstörung einzustellenden Giermoments oder den Betrag einer sonstigen, mit einer der beiden Größen korrelierenden Größe beschreibt.

8. Verfahren nach einem der vorhergehenden Ansprüche,
**dadurch gekennzeichnet, dass**
als Fahrwerkseingriff

  - ein Bremseingriff an einem oder mehreren Rädern (2.1-2.4) und/oder
  - eine Beeinflussung der Radaufstandskräfte an einem oder mehreren Rädern (2.1-2.4) und/oder
  - eine Beeinflussung des Servomoments eines Servomotors eines Servolenksystems und/oder
  - eine Veränderung eines oder mehrerer Radantriebsmomente an einem oder mehreren Rädern (2.1-2.4)

durchgeführt wird.

9. Verfahren nach Anspruch 8 in Verbindung mit Anspruch 7,
**dadurch gekennzeichnet, dass**
bei Beträgen des Eingriffsbestimmungswerts unterhalb eines unteren Schwellenwertes nur eines der Räder (2.1-2.4), insbesondere eines der nicht lenkbaren Räder (2.1 oder 2.2), über die jeweils zugeordnete Bremseinrichtung (3.1-3.4) abgebremst wird.

10. Verfahren nach Anspruch 8 oder 9 in Verbindung mit Anspruch 7,
**dadurch gekennzeichnet, dass**
bei Beträgen des Eingriffsbestimmungswerts größer oder gleich dem unteren Schwellenwert und kleiner als ein oberer Schwellenwert, nur eines der lenkbaren Räder (2.3 oder 2.4) an der Vorderachse über die jeweils zugeordnete Bremseinrichtung (3.3 bzw. 3.4) abgebremst wird.

11. Verfahren nach einem der Ansprüche 9 bis 10 in Verbindung mit Anspruch 7,
**dadurch gekennzeichnet, dass**
bei Beträgen des Eingriffsbestimmungswerts größer oder gleich dem oberen Schwellenwert beide Räder (2.1, 2.4 oder 2.2, 2.3) derselben Fahrzeugseite über die jeweils zugeordnete Bremseinrichtung (3.1, 3.4 oder 3.2, 3.3) abgebremst werden.

12. Verfahren nach Anspruch 8 in Verbindung mit Anspruch 7,
**dadurch gekennzeichnet, dass**
beide Räder (2.1, 2.4 oder 2.2, 2.3) derselben Fahrzeugseite über die jeweils zugeordnete Bremseinrichtung (3.1, 3.4 oder 3.2, 3.3) abgebremst werden, wobei die Bremskraftverteilung zwischen dem lenkbaren Rad (2.3 oder 2.4) und dem entsprechenden nicht lenkbaren Rad (2.2 oder 2.1) derselben Fahrzeugseite parameterabhängig ist und insbesondere fahrzeugabhängig vorgegeben und/oder fahrsituationsabhängig eingestellt werden kann.

13. Verfahren nach einem der vorhergehenden Ansprüche,
**dadurch gekennzeichnet, dass**
ein nach Erfüllen der Eingriffsbedingung ausgelöster Fahrwerkseingriff wieder beendet wird,

  - wenn die vom Fahrer durch Bremsen hervorgerufene, das Bremsmoment beschreibende Bremsmomentgröße größer ist als der Bremsmomentschwellenwert und/oder
  - wenn der Betrag des Lenkradwinkels größer ist als ein Lenkradwinkelschwellenwert und/oder

- wenn der Betrag der Lenkradwinkelgeschwindigkeit größer ist als ein Lenkradwinkelgeschwindigkeitsschwellenwert.

**14.** Verfahren nach einem der vorhergehenden Ansprüche,
**dadurch gekennzeichnet, dass**
die Querdynamik-Störgröße mittels eines Hochpassfilters vor der Überprüfung der Eingriffsbedingung gefiltert wird.

**15.** Querdynamik-Beeinflussungsvorrichtung für ein Fahrzeug (1), mit einer Störgrößen-Bestimmungseinrichtung (5.1) zum Bestimmen einer auf das Fahrzeug (1) und insbesondere den Fahrzeugaufbau einwirkenden Querdynamik-Störgröße, und mit einer Überprüfungseinrichtung (5.2), die zur Überprüfung dient, ob eine vorgegebene Eingriffsbedingung erfüllt ist, wobei bei erfüllter Eingriffsbedingung ein Fahrwerkseingriff zum Beeinflussen der Querdynamik vorgenommen wird, und die Eingriffsbedingung erfüllt ist, wenn der Betrag der ermittelten Querdynamik-Störgröße größer ist als ein Störgrößenschwellenwert **dadurch gekennzeichnet, dass** Eingriffsbedingung erfüllt ist, wenn zusätzlich entweder eines der folgenden Kriterien oder eine Gruppe von mehreren der folgenden Kriterien erfüllt ist:

- die Fahrzeuglängsgeschwindigkeit ist größer als ein Fahrzeuglängsgeschwindigkeitsschwellenwert;
- die sensorisch erfasste Istgierrate ist kleiner oder gleich einer berechneten aktuellen Gierrate;
- eine die Schlupfdifferenz zwischen zwei Fahrzeugrädern beschreibende Schlupfdifferenzgröße ist kleiner oder gleich einem Schlupfdifferenzschwellenwert.

**16.** Querdynamik-Beeinflussungsvorrichtung für ein Fahrzeug (1) nach Anspruch 15,
**dadurch gekennzeichnet, dass** die Eingriffsbedingung erfüllt ist, wenn zusätzlich entweder eines der folgenden Kriterien oder eine Gruppe von mehreren der folgenden Kriterien erfüllt ist:

- eine vom Fahrer durch Bremsen hervorgerufene, ein Bremsmoment beschreibende Bremsmomentgröße ist kleiner oder gleich einem Bremsmomentschwellenwert;
- eine den aktuellen Federweg an einer Fahrwerksfeder eines Fahrzeugrades beschreibende Federweggröße ist kleiner oder gleich einem Federwegschwellenwert;
- eine die Differenz der aktuellen Federwege an den beiden Fahrwerksfedern einer Fahrzeugachse beschreibende Differenzfederweggröße ist kleiner oder gleich einem Differenzfederwegschwellenwert.

**Claims**

**1.** Method for influencing the transversal dynamics of a vehicle (1), wherein a transversal dynamics disturbance variable acting on the vehicle (1) and in particular on the vehicle body is determined and wherein it is checked whether a preset intervention condition is fulfilled, wherein, if the intervention condition is fulfilled, a chassis intervention is performed to influence the transversal dynamics, and wherein the intervention condition is fulfilled if the amount of the determined disturbance variable exceeds a disturbance variable threshold value,
**characterised in that**
the intervention condition is fulfilled if in addition one of the following criteria or a group of several of the following criteria is met:

- the longitudinal speed of the vehicle is higher than a longitudinal speed threshold value for the vehicle;
- the actual yaw velocity detected by sensors is lower than or equal to a calculated current yaw velocity;
- a slip differential variable defining the slip differential between two vehicle wheels is lower than or equal to a slip differential threshold value.

**2.** Method according to claim 1,
**characterised in that**
the intervention condition is fulfilled if a braking torque variable caused by the driver by braking and defining a braking torque is lower than or equal to a braking torque threshold value.

**3.** Method according to claim 1 or 2,
**characterised in that**
the intervention condition is fulfilled if at least one of the following criteria is met:

- a spring deflection variable defining the current spring deflection of a chassis spring of a vehicle wheel is less than or equal to a spring deflection threshold value;
- a differential spring deflection variable defining the difference between the current spring deflections at the two chassis springs of a vehicle axle is less than or equal to a differential spring deflection threshold value.

4. Method according to any of the preceding claims,
**characterised in that**
the intervention condition is fulfilled if the amount of the steering wheel angle is less than or equal to a steering wheel angle threshold value and/or if the amount of the angular steering wheel speed is less than or equal to an angular steering wheel speed threshold value.

5. Method according to any of the preceding claims,
**characterised in that**
the intervention condition is fulfilled if the amount of the stationary transverse acceleration is less than or equal to a transverse acceleration threshold value.

6. Method according to any of the preceding claims,
**characterised in that**
a side wind (SW) acting on the body of the vehicle (1) is determined by means of the disturbance variable determination device (5), and **in that** a corresponding disturbance of the transversal dynamics of the vehicle (1) is at least partially compensated for by the chassis intervention.

7. Method according to any of the preceding claims,
**characterised in that**
an intervention defining value is determined which defines the amount of the transversal dynamics disturbance variable or the amount of the yawing moment determined by means of the transversal dynamics disturbance variable and to be set to compensate for the transversal disturbance or the amount of another variable correlating with one of these two variables.

8. Method according to any of the preceding claims,
**characterised in that**
as a chassis intervention

  - a braking intervention is performed on one or more of the wheels (2.1 - 2.4) and/or
  - the wheel contact forces are influenced on one or more of the wheels (2.1 - 2.4) and/or
  - the servo torque of a servo motor of a power-assisted steering system is influenced and/or
  - one or more wheel drive torques is/are changed at on one or more of the wheels (2.1 - 2.4).

9. Method according to claim 8 in combination with claim 7,
**characterised in that**
at amounts of the intervention determination value below a lower threshold value, only one of the wheels (2.1 - 2.4), in particular one of the non-steered wheels (2.1 or 2.2), is braked by means of the assigned braking device (3.1 - 3.4).

10. Method according to claim 8 or 9 in combination with claim 7,
**characterised in that**
at amounts of the intervention determination value higher than or equal to the lower threshold value and lower than an upper threshold value, only one of the steered wheels (2.3 or 2.4) on the front axle is braked by means of the assigned braking device (3.3 or 3.4).

11. Method according to any of claims 9 to 10 in combination with claim 7,
**characterised in that**
at amounts of the intervention determination value higher than or equal to the upper threshold value, both wheels (2.1, 2.4 or 2.2, 2.3) of the same side of the vehicle are braked by means of the assigned braking device (3.1, 3.4 or 3.2, 3.3).

12. Method according to claim 8 in combination with claim 7,
**characterised in that**
both wheels (2.1, 2.4 or 2.2, 2.3) of the same side of the vehicle are braked by means of the assigned braking device (3.1, 3.4 or 3.2, 3.3), wherein the braking force is distributed between the steered wheel (2.3 or 2.4) and the corresponding non-steered wheel (2.2 or 2.1) on the same side of the vehicle in dependence on parameters and can in particular be preset in a vehicle-dependent manner and/or adjusted in dependence on driving situation.

13. Method according to any of the preceding claims,
    **characterised in that**
    a chassis intervention triggered by a fulfilment of the intervention conditions is terminated,

    - if the braking torque variable caused by the driver by braking and defining the braking torque is higher than the braking torque threshold value and/or
    - if the amount of the steering wheel angle is higher than a steering wheel angle threshold value and/or
    - if the amount of the angular steering wheel speed is higher than an angular steering wheel speed threshold value.

14. Method according to any of the preceding claims,
    **characterised in that**
    the transversal dynamics disturbance variable is filtered by means of a high-pass filter prior to the checking of the intervention condition.

15. Device for influencing the transversal dynamics of a vehicle (1), comprising a disturbance variable determination device (5.1) for the determination of a transversal dynamics disturbance variable acting on the vehicle (1) and in particular on the body of the vehicle, and a checking device (5.2) for checking whether a preset intervention condition is fulfilled, wherein, if the intervention condition is fulfilled, a chassis intervention is performed to influence the transversal dynamics, and wherein the intervention condition is fulfilled if the amount of the determined disturbance variable exceeds a disturbance variable threshold value,
    **characterised in that**
    the intervention condition is fulfilled if in addition one of the following criteria or a group of several of the following criteria is met:

    - the longitudinal speed of the vehicle is higher than a longitudinal speed threshold value for the vehicle;
    - the actual yaw velocity detected by sensors is lower than or equal to a calculated current yaw velocity;
    - a slip differential variable defining the slip differential between two vehicle wheels is lower than or equal to a slip differential threshold value.

16. Device for influencing the transversal dynamics of a vehicle (1) according to claim 15, **characterised in that**
    the intervention condition is fulfilled if in addition one of the following criteria or a group of several of the following criteria is met:

    - a braking torque variable caused by the driver by braking and defining a braking torque is lower than or equal to a braking torque threshold value;
    - a spring deflection variable defining the current spring deflection of a chassis spring of a vehicle wheel is less than or equal to a spring deflection threshold value;
    - a differential spring deflection variable defining the difference between the current spring deflections at the two chassis springs of a vehicle axle is less than or equal to a differential spring deflection threshold value.

**Revendications**

1. Procédé pour influer sur la dynamique transversale d'un véhicule (1) ; selon ce procédé, une grandeur de perturbation de dynamique transversale agissant sur le véhicule (1) et en particulier sur la carrosserie du véhicule (1) est détectée et une vérification est effectuée pour savoir si une condition d'intervention définie est remplie lorsque la condition d'intervention est satisfaite, une intervention sur le véhicule pour influencer la dynamique transversale est effectuée et la condition d'intervention est remplie lorsque la valeur d'une grandeur perturbatrice de dynamique transversale déterminée est supérieure à une valeur seuil de grandeur de perturbation, **caractérisé en ce que** la condition d'intervention est remplie lorsqu'en outre soit un des critères suivants soit un groupe de plusieurs des facteurs suivants est respecté :

    - la vitesse longitudinale du véhicule est supérieure à une valeur seuil de vitesse longitudinale du véhicule ;
    - le taux de lacet réel détecté par capteur est inférieur ou égal à un taux de lacet actuel calculé ;

- une grandeur de différence de glissement représentant la différence de glissement entre deux roues du véhicule est inférieure ou égale à une valeur seuil de différence de glissement.

2. Procédé selon la revendication 1, **caractérisé en ce que** la condition d'intervention est remplie lorsqu'une grandeur de couple de freinage représentant un couple de freinage occasionné par un freinage du conducteur est inférieure ou égale à une valeur seuil de couple de freinage.

3. Procédé selon la revendication 1 ou 2, **caractérisé en ce que** la condition d'intervention est remplie lorsqu'au moins un des critères suivants est respecté :

- une grandeur de débattement représentant le débattement actuel d'un ressort de suspension d'une roue du véhicule est inférieure ou égale à une valeur seuil ;
- une grandeur de débattement différentiel représentant la différence entre les débattements actuels sur les deux ressorts de suspension d'un essieu du véhicule est inférieure ou égale à une valeur seuil de débattement différentiel ;

4. Procédé selon l'une quelconque des revendications précédentes, **caractérisé en ce que** la condition d'intervention est remplie lorsque la valeur de l'angle du volant est inférieure ou égale à la valeur seuil d'angle du volant et / ou lorsque la valeur de la vitesse angulaire de volant est inférieure ou égale à une valeur seuil de vitesse angulaire de volant.

5. Procédé selon l'une quelconque des revendications précédentes, **caractérisé en ce que** la condition d'intervention est remplie lorsque la valeur de l'accélération transversale stationnaire est inférieure ou égale à une valeur seuil.

6. Procédé selon l'une quelconque des revendications précédentes, **caractérisé en ce qu'**un vent latéral côté (SW) agissant sur la carrosserie du véhicule (1) est détecté au moyen d'un dispositif de détermination (5) de grandeur de perturbation et **en ce qu'**une perturbation correspondante de la dynamique transversale du véhicule (1) est au moins partiellement compensée par l'intervention sur la suspension.

7. Procédé selon l'une quelconque des revendications précédentes, **caractérisé en ce qu'**est déterminée une valeur de détermination d'intervention qui représente la valeur de la grandeur de perturbation de la dynamique transversale ou la valeur du couple de lacet déterminé au moyen de la grandeur de perturbation de la dynamique transversale devant être réglée pour compenser la perturbation transversale ou la valeur d'une autre grandeur en corrélation avec l'une des deux grandeurs.

8. Procédé selon l'une quelconque des revendications précédentes, **caractérisé en ce qu'**une intervention sur la suspension est effectuée comme

- une intervention de freinage sur l'une ou plusieurs roues (2.1 - 2.4) et / ou
- une influence de freinage des forces de contact de roues sur l'une ou plusieurs roues (2.1 - 2.4) et / ou
- une influence du servocouple d'un servomoteur d'un système de direction assistée et / ou
- une modification d'un ou de plusieurs couple d'entraînement de roue sur une ou plusieurs roues (2.1 - 2.4).

9. Procédé selon la revendication 8 en relation avec la revendication 7, **caractérisé en ce qu'**en présence de valeurs de détermination d'intervention inférieures à une valeur seuil inférieure uniquement une des roues (2.1 - 2.4) en particulier une des roues non motrices (2.1 ou 2.2) est freinée par le dispositif de freinage concerné (3.1 - 3.4).

10. Procédé selon la revendication 8 ou 9 en relation avec la revendication 7, **caractérisé en ce qu'**en présence de valeurs de détermination d'intervention supérieures ou égales à la valeur seuil inférieure et inférieure à une valeur seuil supérieure, uniquement une des roues motrices (2.3 ou 2.4) de l'essieu avant est freinée par le dispositif de freinage concerné (3.3 ou 3.4).

11. Procédé selon l'une quelconque des revendications 9 à 10 en relation avec la revendication 7, **caractérisé en ce qu'**en présence de valeurs de détermination d'intervention supérieures ou égales à la valeur seuil supérieure les deux roues (2.1, 2.4 ou 2.2, 2.3) du même côté du véhicule sont freinées par le dispositif de freinage concerné (3.1, 3.4 ou 3.2, 3.3).

12. Procédé selon la revendication 8 en relation avec la revendication 7, **caractérisé en ce que** les deux roues (2.1, 2.4 ou 2.2, 2.3) du même côté de véhicule sont freinées par le dispositif de freinage concerné (3.1, 3.4 ou 3.2, 3.3), la distribution de la force de freinage entre la roue motrice (2.3 ou 2.4) et la roue correspondante non motrice (2.2 ou 2.1) du même côté de véhicule est définie en fonction de paramètre et en particulier en fonction du véhicule et / ou peut être réglée en fonction de la situation de conduite.

**13.** Procédé selon l'une quelconque des revendications précédentes, **caractérisé en ce qu'**une intervention sur la suspension déclenchée est de nouveau achevée une fois que la condition d'intervention est remplie.

- lorsque la grandeur de couple de freinage représentant le couple de freinage occasionné par un freinage du conducteur est supérieure à la valeur seuil de couple de freinage et / ou
- lorsque la valeur angulaire du volant est supérieure à une valeur seuil et / ou
- lorsque la valeur de la vitesse angulaire du volant est supérieure à une valeur seuil.

**14.** Procédé selon l'une quelconque des revendications précédentes, **caractérisé en ce que** la grandeur de perturbation de la dynamique transversale est filtrée au moyen d'un filtre passe-haut avant le contrôle de la condition d'intervention.

**15.** Dispositif permettant d'influer sur la dynamique transversale pour un véhicule (1) doté d'un dispositif de détermination de la grandeur de perturbation (5.1) pour déterminer une grandeur de perturbation de la dynamique transversale agissant sur le véhicule (1) et en particulier sur la carrosserie du véhicule et d'un dispositif de contrôle (5.2) qui sert à contrôler si une condition d'intervention définie est remplie, en cas de condition d'intervention remplie, une intervention sur la suspension pour influencer la dynamique transversale est effectuée, et la condition d'intervention est remplie lorsque la valeur de la grandeur de perturbation de la dynamique transversale détectée est supérieure à une valeur seuil **caractérisé en ce que** la condition d'intervention est remplie lorsqu'en outre soit un des critères suivants ou soit un groupe de plusieurs des critères suivants est respecté :

- la vitesse longitudinale du véhicule est supérieure à une valeur seuil de vitesse longitudinale du véhicule ;
- le taux de lacet réel détecté par capteur est inférieur ou égal à un taux de lacet actuel calculé ;
- une grandeur de différence de glissement représentant la différence de glissement entre deux roues du véhicule est inférieure ou égale à une valeur seuil de différence de glissement.

**16.** Dispositif permettant d'influencer la dynamique transversale pour un véhicule (1), selon la revendication 15, **caractérisé en ce que** la condition d'intervention est remplie lorsqu'en plus soit un des critères suivants soit un groupe de plusieurs critères suivants est respecté :

- une grandeur de couple de freinage représentant le couple de freinage occasionné par un freinage du conducteur est inférieure ou égale à une valeur seuil de couple de freinage ;
- une grandeur de débattement représentant le débattement actuel d'un ressort de suspension d'une roue du véhicule est inférieure ou égale à une valeur seuil ;
- une grandeur de débattement différentiel représentant la différence entre les débattements actuels sur les deux ressorts de suspension d'un essieu du véhicule est inférieure ou égale à une valeur seuil de débattement différentiel.

**Fig. 1**

**Fig. 2**

**Fig. 3**

K2 — $|\delta| \le \delta_s$

K3 — $|\dot{\delta}| \le \dot{\delta}_s$

K4 — $v_x > v_{xs}$

K5 — $\dot{\psi} \le \dot{\psi}_{Mod}$

K6 — $a_{y,stat} \le a_{y,stat,s}$

K7 — $M_{br} \le M_{brs}$

K8 — $z_i \le z_s; i = VL, VR, HL, HR$ , $|zHP_{VL} - zHP_{VR}| \le \Delta z_s$

K9 — $|\lambda_{HL} - \lambda_{HR}| \le \lambda_{hs}$ , $|\lambda_{VL} - \lambda_{VR}| \le \lambda_{vs}$

AND → F2

VAL

**Fig. 4**

OFF

K10 — $|\delta| > \delta_s$

K11 — $|\dot{\delta}| > \dot{\delta}_s$

K12 — $M_{br} > M_{brs}$

OR → F3

**IN DER BESCHREIBUNG AUFGEFÜHRTE DOKUMENTE**

**In der Beschreibung aufgeführte Patentdokumente**

- DE 4014365 A1
- WO 2006037678 A1
- DE 4419650 A1
- DE 102004017638
- DE 102004017638 A1